Europäisches Patentamt

European Patent Office

Office européen des brevets

(11) Veröffentlichungsnummer: **0 226 736**

**A2**

(12) # EUROPÄISCHE PATENTANMELDUNG

(21) Anmeldenummer: **86113995.4**

(22) Anmeldetag: **09.10.86**

(51) Int. Cl.⁴: **F 24 D 3/14**

(30) Priorität: **20.12.85 CH 5456/85**

(43) Veröffentlichungstag der Anmeldung:
**01.07.87 Patentblatt 87/27**

(84) Benannte Vertragsstaaten:
**AT CH DE FR LI NL SE**

(71) Anmelder: **Gebrüder Matter AG Fama**
**Farbweg**
**CH-5742 Kölliken(DE)**

(72) Erfinder: **Rhyn, Peter**
**Juraweg**
**CH-4803 Vordemwald(CH)**

(74) Vertreter: **Morva, Tibor**
**Morva Patentdienste Hintere Vorstadt 34**
**CH-5001 Aarau(CH)**

(54) **Kunststoffprofilleiste zum Verlegen und Fixieren des Heizungsrohres einer Fussbodenheizung.**

(57) Die Kunststoffprofilleiste (1) ist einstückig ausgebildet. An ihrer Oberseite sind in gleichmässigen Abständen U-förmige Rohrhalter (2) und an ihrer Unterseite mehrere für deren steckbare Befestigung an einer wärmeisolierenden Unterlage vorgesehene, mit Widerhaken versehene Dornen (8) einstückig angeformt. Die Kunststoffprofilleiste (1) weist mehrere für dei lösbare Befestigung von zusätzlichen U-förmigen Rohrhaltern (4) bestimmte Verbindungselemente (3) auf. Die einstückig angeformten Rohrhalter (2) passen zum meistverwendeten Heizungsrohrabstand. Die zusätzlichen U-förmigen Rohrhalter (4) ermöglichen das Verlegen eines Heizungsrohres mit anderem Rohrabstand. Die Kunststoffprofilleiste (1) ist durch Aneinandersetzen mehrerer Stücke verlängerbar. Die zur lösbaren Verlängerung dienenden Verbinder (9, 10) sind auch für die Aufnahme zusätzlicher U-förmiger Rohrhalter (4) vorgesehen.

Fig. 2

EP 0 226 736 A2

### Kunststoffprofilleiste zum Verlegen und Fixieren
### des Heizungsrohres einer Fussbodenheizung

Die vorliegende Erfindung betrifft eine Kunststoffprofilleiste zum Verlegen und Fixieren des Heizungsrohres einer Fussbodenheizung mit mehreren an deren Oberseite in gleichmässigen Abständen einstückig angeformten U-förmigen Rohrhaltern.

Aus der DE-OS 31 08 573 ist eine Kunststoffprofilleiste der eingangs erwähnten Art bekannt. Die dort beschriebene Kunststoffprofilleiste ist an beiden Enden mit komplementär zueinander ausgebildeten Verbinder versehen, die wahlweise einen geradlinigen oder einen rechtwinkligen starren Anschluss einer gleichartigen Kunststoffprofilleiste gestatten. Die Verbinder ragen aus der Ebene der Kunststoffprofilleiste heraus und wirken bei den Verlegearbeiten störend. Die Kunststoffprofilleiste wird bei der Verlegung eines Heizungsrohres mit ihrer glatten Unterseite auf eine wärmeisolierende Unterlage gelegt, wobei sie daran verrutschen kann. In dieser Druckschrift ist auch eine andere, in gleichmässigen Abständen mit Langlöchern versehene Kunststoffprofilleiste beschrieben. Die mit Rastelementen versehenen einzelnen Rohrhalter werden bei dieser Anordnung in die Langlöcher gesteckt. Nachteilig ist bei diesen Kunststoffprofilleisten, dass bei starr angeformten Rohrhaltern der Rohrabstand nicht verändert werden kann, wobei für jeden Rohrabstand ein Lager und eine Pressform angelegt werden müssen, und dass bei eingesteckten Rohrhaltern die Montagearbeit bedeutend ist und sowohl die Lagerhaltung als auch die Herstellung mit wirtschaftlichen Nachteilen verbunden ist.

Um ein Verrutschen einer Montageschiene auf der Unterlage bei der Verlegung des Heizungsrohres einer Bodenheizung zu verhindern, ist in der Anordnung nach der DE-OS 32 09 137 oder nach der CH-PS 630 714 vorgesehen, die einzelnen Rohrhalter mit Dornen zu versehen, die durch die Montageschine in eine wärmeisolierende Unterlage hineingedrückt werden. Rückhaltemittel an den Dornen verhindern ein Ausrutschen der Dornen aus der Unterlage. Die Montagearbeit der einzelnen Rohrhalter ist dabei mit hohem Arbeitsaufwand verbunden.

Aufgabe der vorliegenden Erfindung ist es, eine Kunststoffprofilleiste der eingangs erwähnten Art anzugeben, die mit verhältnismässig wenigen Teilen für unterschiedliche Heizungsrohrabstände verwendbar ist, beim Verlegen des Heizungsrohres an der Unterlage fixiert bleibt und wirtschaftlich vorteilhaft ist.

Die gestellte Aufgabe ist dadurch gelöst, dass die Kunststoffprofilleiste mindestens in den Bereichen zwischen den angeformten Rohrhaltern mindestens ein für die lösbare Befestigung eines zusätzlichen U-förmigen Rohrhalters bestimmtes Verbindungselement aufweist und an der Unterseite der Kunststoffprofilleiste mehrere für deren steckbare Befestigung an einer wärmeisolierenden Unterlage vorgesehene Dornen einstückig angeformt sind. Diese Kunststoffprofilleiste kann mit einstückig angeformten Rohrhaltern für den am häufigsten vorkommenden Heizungsrohrabstand auf Lager gehalten werden. Bei abweichenden Heizungsrohrabständen können zusätzliche U-förmige Rohrhalter an der Kunststoffprofilleiste befestigt werden. Die an der Unterseite der Kunststoffprofilleiste vorstehenden Dornen verhindern ein Verrutschen beim Verlegen der Heizungsrohre.

Das Verbindungselement an der Kunststoffprofilleiste kann aus einem durchgehenden Loch bestehen, in welches ein zusätzlicher Rohrhalter mit mindestens einem an der Unterseite der Kunststoffprofilleiste vorstehenden Schnappglied einsteckbar ist.

Die Kunststoffprofilleiste kann mit Ausnehmungen versehen sein, in welche verdrehungssichernde an jedem zusätzlichen Rohrhalter angeformte Fortsätze eingreifen.

Vorteilhafterweise bilden die an der Kunststoffprofilleiste einstückig angeformten Rohrhalter und die für die zusätzlichen Rohrhalter vorgesehenen Verbindungselemente zwei parallele, in Längsrichtung der Kunststoffprofilleiste ausgerichtete Reihen. Diese Anordnung ergibt Vorteile bei der Kunststoffpressform-Herstellung und auch beim Anbringen von zusätzlichen U-förmigen Rohrhaltern.

Die Teilung der einstückig angeformten Rohrhalter ist vorteilhafterweise ein ganzzähliges Mehrfache der Teilung der für die zusätzlichen Rohrhalter vorgesehenen Verbindungselemente.

Bevorzugt sind die zur Befestigung der Kunststoffprofilleiste an einer wärmeisolierenden Unterlage dienenden Dornen spitzig ausgebildet und mit Widerhaken versehen.

Vorteilhafterweise weist die Kunststoffprofilleiste an beiden Endbereichen komplementär zueinander ausgebildete Verbinder auf, die einen lösbaren starren Anschluss gleichartiger Kunststoffprofilleisten aneinander gestatten, wobei die Dicke der Kunststoffprofilleiste an der Stelle der ineinandergreifenden Verbinder höchstens die Dicke der Kunststoffprofilleiste an den übrigen Stellen beträgt. Mit Vorteil sind auch die Verbinder mit Verbindungselementen und Ausnehmungen versehen. Durch diese Massnahme ist es möglich, die Verbinder ausreichend lang auszubilden und die Teilung der U-förmigen, angeformten und zusätzlichen Rohrhalter bei zusammengesetzten Kunststoffprofilleisten lückenlos fortzusetzen. Die Kunststoffprofilleiste kann an beiden Endbereichen einen in Längsrichtung vorstehenden Haken aufweisen, der einer an der lösbar angeschlossenen Kunststoffprofilleiste angeformten Falle hintergreift.

Im folgenden wird anhand der beiliegenden Zeichnungen ein Ausführungsbeispiel der Erfindung beschrieben. Es zeigen:

Fig. 1 eine Kunststoffprofilleiste in der Vorderansicht,

Fig. 2 in der Draufsicht,

Fig. 3 einen zusätzlichen Rohrhalter in der Vorderansicht und

Fig. 4 in der Seitenansicht.

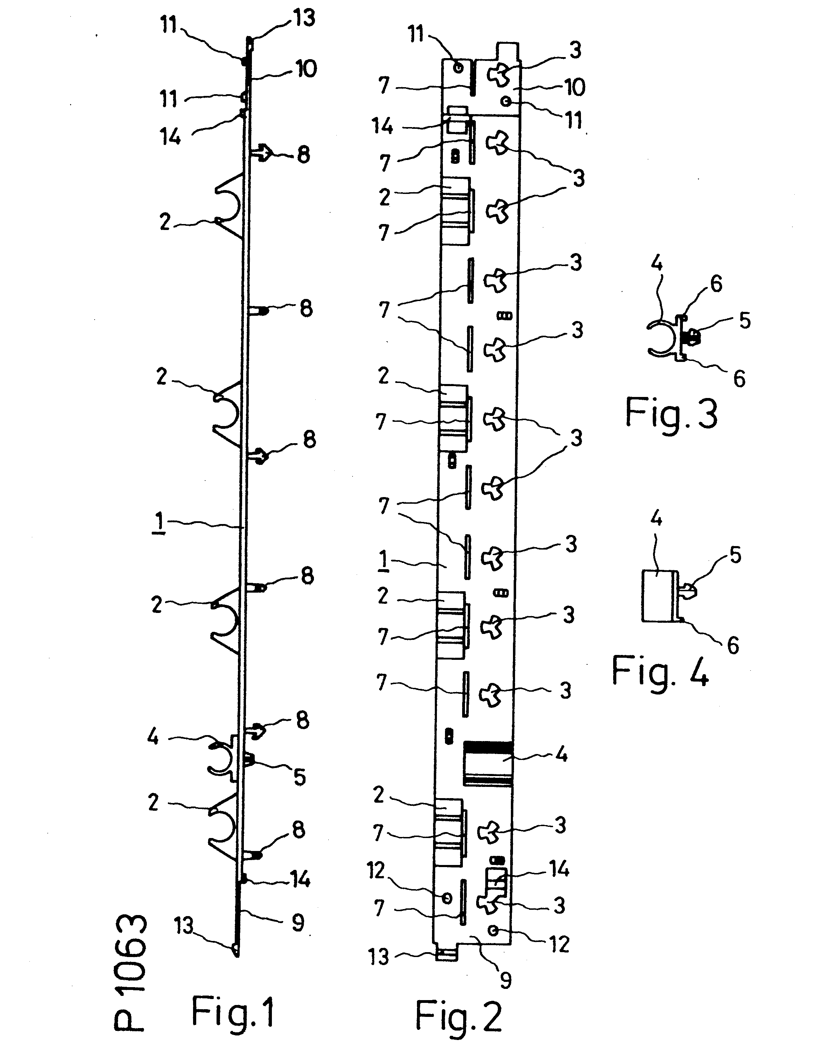

Die in Fig. 1 dargestellte Kunststoffprofilleiste 1 ist aus Polypropylen hergestellt und dient zum Verlegen und Fixieren des nicht dargestellten Heizungsrohrs einer Fussbodenheizung. Das Heizungsrohr wird bei der Verlegung in die an der Oberseite der Kunststoffprofilleiste 1 einstückig angeformten U-förmigen Rohrhaltern 2 eingelegt. Die Rohrabstände sind durch die gleichmässigen Abstände der U-förmigen Rohrhalter 2 gegeben. Um die Rohrabstände im Bedarfsfall ändern zu können, ist die Kunststoffprofilleiste 1 mit aus durchgehenden Löchern bestehenden Verbindungselementen 3 versehen. In diese Löcher 3 können bei Bedarf zusätzliche U-förmige Rohrhalter 4 eingesteckt werden. Am zusätzlichen Rohrhalter 4 sind an der dem U-förmigen Rohraufnahmeteil abgekehrten Seite ein Schnappglied 5 und ein verdrehungssichernder Fortsatz 6 einstückig angeformt, wie die Figuren 3 und 4 es zeigen.. Das Schnappglied 5 wird bei der Befestigung des zusätzlichen U-förmigen Rohrhalters 4 in ein Loch 3 gesteckt und soweit gedrückt, bis es an der Unterseite der Kunststoffprofilleiste 1 die gespreizte Stellung annimmt. Der verdrehungssichernde Fortsatz 6 greift in eine in der Kunststoffprofilleiste angebrachte Ausnehmung 7 ein.

Die an der Kunststoffprofilleiste 1 einstückig angeformten Rohrhalter 2 und die Löcher 3 bilden zwei parallele, in Längsrichtung der Kunststoffprofilleiste 1 ausgerichtete Reihen. Die Teilung der einstückig angeformten Rohrhalter 2 ist das Dreifache der Teilung der Löcher 3. Bei diesem Teilungsverhältnis können alle praktisch vorkommenden Heizungsrohrabstände berücksichtigt werden, wobei der am meisten vorkommende Heizungsrohrabstand der Teilung der einstückig angeformten Rohrhalter 2 entspricht. Ein allfälliges Lager muss nur die einstückig und einfach herstellbare und auch meistverwendete Kunststoffprofilleiste 1 und für Spezialfälle noch zusätzliche U-förmige Rohrhalter führen.

An der Unterseite der Kunststoffprofilleiste 1 sind mehrere mit Widerhaken versehene Dornen 8 einstückig angeformt. Diese Dornen 8 dienen zur steckbaren Befestigung der Kunststoffprofilleiste 1 an einer nicht dargestellten wärmeisolierenden Unterlage. In den meisten Fällen besteht die wärmeisolierende Unterlage aus einem geschäumten Kunststoff, wie z.B. aus Polyurethanschaum. Bei der Verlegung der Kunststoffprofilleisten 1 werden zuerst diese ausgerichtet und dann die Dornen 8 in die wärmeisolierende Unterlage gedrückt. Nach der Befestigung der Kunststoffprofilleisten 1 an der Unterlage kann man mit dem Verlegen des Heizungsrohres beginnen.

An der Kunststoffprofilleiste 1 sind an beiden Endbereichen komplementär zueinander ausgebildete Verbinder 9, 10 einstückig angeformt. Diese Verbinder 9, 10 sind an einem die halbe Dicke der Kunststoffprofilleiste 1 aufweisenden Teil angeordnet. Die beiden Verbinder 9, 10 weisen wechselweise nur die obere oder die untere Hälfte der Kunststoffprofilleiste 1 auf, wobei der eine Verbinder 9 vorstehende Nocken 11 und der andere Verbinder 10 für die Aufnahme der Nocken 11 bestimmte Löcher 12 führen. Bei lösbar ineinandergreifenden Verbindern 9, 10 zweier benachbarten Kunststoffprofilleisten 1 ist die Dicke der Verbindungsstelle nicht grösser als die Dicke der Kunststoffprofilleiste an den übrigen Stellen. Durch diese Massnahme ist es möglich, eine aus mehreren Einzelelementen zusammengesteckte Kunststoffprofilleiste mit gleichbleibender Dicke auszulegen.

Um die zusätzlichen U-förmigen Rohrhalter 4 bei lösbar zusammengesteckten Kunststoffprofilleisten 1 der Teilung der Löcher 3 entsprechend überall befestigen zu können, ist die Kunststoffprofilleiste 1 auch an den Verbindern 9, 10 mit Löchern 3 und Ausnehmungen 7 versehen.

Um die aneinander lösbar angeschlossenen Kunststoffprofilleisten 1 zu verriegeln, ist an beiden Endbereichen der Kunststoffprofilleiste 1 ein vorstehender Haken 13 angeformt. Dieser Haken 13 hintergreift bei lösbar zusammengebauten Kunststoffprofilleisten 1 eine am Gegenstück angeformte Falle 14.

Die beschriebene Kunststoffprofilleiste 1 weist für den meistverwendeten Heizungsrohrabstand einstückig angeformte U-förmige Rohrhalter 2 auf und kann mit Hilfe von zusätzlichen einheitlich ausgebildeten U-förmigen Rohrhaltern 4 an mehrere andere Heizungsrohrabstände angepasst werden. Die Kunststoffprofilleiste 1 wird durch an ihrer Unterseite einstückig angeformte, mit Widerhaken versehene Dornen 8 an einer wärmeisolierenden Unterlage steckbar befestigt. Die lösbare Verlängerung der Kunststoffprofilleiste 1 ist ohne hervorstehende Teile möglich, wobei die zur Verlängerung dienenden Verbinder 9, 10 auch für die Aufnahme zusätzlicher U-förmiger Rohrhalter 4 vorgesehen sind.

## Patentansprüche

1. Kunststoffprofilleiste zum Verlegen und Fixieren des Heizungsrohres einer Fussbodenheizung mit mehreren an deren Oberseite in gleichmässigen Abständen einstückig angeformten U-förmigen Rohrhaltern, **dadurch gekennzeichnet, dass** die Kunststoffprofilleiste (1) mindestens in den Bereichen zwischen den angeformten Rohrhaltern (2) mindestens ein für die lösbare Befestigung eines zusätzlichen U-förmigen Rohrhalters (4) bestimmtes Verbindungselement (3) aufweist und an der Unterseite der Kunststoffprofilleiste (1) mehrere für deren steckbare Befestigung an einer wärmeisolierenden Unterlage vorgesehene Dornen (8) einstückig angeformt sind.

2. Kunststoffprofilleiste nach Anspruch 1, **dadurch gekennzeichnet, dass** das Verbindungselement (3) an der Kunststoffprofilleiste (1) aus einem durchgehenden Loch besteht, in welches ein zusätzlicher Rohrhalter (4) mit mindestens einem an der Unterseite der Kunststoffprofilleiste (1) vorstehenden Schnappglied (5) einsteckbar ist.

3. Kunststoffprofilleiste nach einem der Ansprüche 1 oder 2, **dadurch gekennzeichnet, dass** die Kunststoffprofilleiste (1) mit Ausnehmungen (7) versehen ist, in welche verdrehungssichernde an jedem zusätzlichen Rohrhalter (4) angeformte Fortsätze (6) eingreifen.

4. Kunststoffprofilleiste nach einem der Ansprüche 1 bis 3, **dadurch gekennzeichnet, dass** die an der Kunststoffprofilleiste (1) einstückig angeformten Rohrhalter (2) und die für die zusätzlichen Rohrhalter (4) vorgesehenen Verbindungselemente (3) zwei parallele, in Längsrichtung der Kunststoffprofilleiste (1) ausgerichtete Reihen bilden.

5. Kunststoffprofilleiste nach einem der Ansprüche 1 bis 4, **dadurch gekennzeichnet, dass** die Teilung der einstückig angeformten Rohrhalter (2) ein ganzzähliges Mehrfache der Teilung der für die zusätzlichen Rohrhalter (4) vorgesehenen Verbindungselemte (3) ist.

P1063

6. Kunststoffprofilleiste nach einem der Ansprüche 1 bis 5, **dadurch gekennzeichnet, dass** die zur Befestigung der Kunststoffprofilleiste (1) an einer wärmeisolierenden Unterlage dienenden Dornen (8) spitzig ausgebildet und mit Widerhaken versehen sind.

7. Kunststoffprofilleiste nach einem der Ansprüche 1 bis 6, **dadurch gekennzeichnet, dass** die Kunststoffprofilleiste (1) an beiden Endbereichen komplementär zueinander ausgebildete Verbinder (9, 10) aufweist, die einen lösbaren starren Anschluss gleichartiger Kunststoffprofilleisten (1) aneinander gestatten, wobei die Dicke der Kunststoffprofilleiste an der Stelle der ineinandergreifenden Verbinder (9, 10) höchstens die Dicke der Kunststoffprofilleiste an den übrigen Stellen beträgt.

8. Kunststoffprofilleiste nach Anspruch 7, **dadurch gekennzeichnet, dass** auch die Verbinder (9, 10) mit Verbindungselementen (3) und Ausnehmungen (7) versehen sind.

9. Kunststoffprofilleiste nach Anspruch 7, **dadurch gekennzeichnet, dass** die Kunststoffprofilleiste (1) an beiden Endbereichen einen in Längsrichtung vorstehenden Haken (13) aufweist, der eine an der lösbar angeschlossenen Kunststoffprofilleiste (1) angeformte Falle (14) hintergreift.

0226736

Fig.1

Fig.2

Fig.3

Fig. 4

P 1063